# EUROPEAN PATENT APPLICATION

(11) **EP 4 321 637 A1**
(43) Date of publication of application: **14.02.2024**
(21) Application number: 22784626.8
(22) Date of filing: 31.03.2022
(51) Int. Cl.: C21D 9/46, C25D 5/12, C25D 5/50, C22C 38/00, C22C 38/14, C23C 18/32, H01M 50/119

(54) **SURFACE-TREATED STEEL SHEET**

(30) Priority: 09.04.2021 JP 2021066776
(71) Applicant: NIPPON STEEL CORPORATION, Chiyoda-ku Tokyo 100-8071 (JP)
(72) Inventor: KAWAMOTO, Kosuke, Tokyo 100-8071 (JP); GOTO, Yasuto, Tokyo 100-8071 (JP); OKA, Masaharu, Tokyo 100-8071 (JP); DAIROKUNO, Yuta, Tokyo 100-8071 (JP); KAJII, Yuji, Tokyo 100-8071 (JP); SHIMADA, Koki, Tokyo 100-8071 (JP)
(74) Representative: Zimmermann & Partner Patentanwälte mbB
(86) International application number: PCT/JP2022/016465
(87) International publication number: WO 2022/215642

(57) **Abstract**

A surface-treated steel sheet is provided that has excellent strength even when the surface-treated steel sheet is provided with a Ni-Co-Fe alloy layer. A surface-treated steel sheet (1) of the present disclosure includes a steel sheet (2), and a Ni-Co-Fe alloy layer (3) on a steel sheet surface. The steel sheet (2) has a microstructure containing: ferrite (100), and one or more kinds (200) selected from the group consisting of cementite, pearlite, and bainite having an area fraction of 1.2 to 5.0% in total. The Ni-Co-Fe alloy layer (3) contains Ni, Co and Fe.

## Description

### TECHNICAL FIELD

The present disclosure relates to a surface-treated steel sheet.

### BACKGROUND ART

A surface-treated steel sheet having nickel (Ni) plating on its surface is used as a surface-treated steel sheet for battery containers such as primary batteries and secondary batteries. For example, a common alkaline battery is manufactured as follows. First, a positive electrode can is manufactured by deep drawing and pressing a surface-treated steel sheet into the shape of a battery container. Next, a conductive film, a positive electrode material, a separator, an electrolyte, a negative electrode material and a current collector are enclosed in the positive electrode can. The positive electrode can functions as a battery container and also functions as a current collector. Other kinds of primary batteries and secondary batteries are manufactured by a similar manufacturing method. That is, the surface-treated steel sheet functions as a battery container, and also functions as a current collector when connected to a negative electrode or a positive electrode.

On the other hand, batteries are different in required current values depending on the intended application. A surface-treated steel sheet having an alloy layer containing cobalt (Co) in addition to Ni on its surface may be used for batteries for which a high-current discharge is required. Co is a more active metal compared to Ni. Therefore, by containing Co in an alloy layer, the contact resistance between the surface-treated steel sheet and a positive electrode material or a negative electrode material decreases. As a result, the current value of the battery can be increased.

Surface-treated steel sheets that each include an alloy layer containing Ni and Co on the surface thereof and which are capable of increasing the current value of a battery are disclosed, for example, in International Application Publication No. WO2019/159794 (Patent Literature 1), International Application Publication No. WO2012/147843 (Patent Literature 2), and International Application Publication No. WO2019/083044 (Patent Literature 3). In each of Patent Literatures 1 to 3, the composition of the alloy layer and the distribution of each element in the alloy layer are controlled to increase the current value of the battery.

International Application Publication No. WO2019/159794 (Patent Literature 1) discloses a surface-treated steel sheet for a battery container that includes a Ni-Co-Fe-based diffusion alloy plating layer on at least one surface of a base steel sheet. The diffusion alloy plating layer is composed of, in order from the base steel sheet side, a Ni-Fe alloy layer and a Ni-Co-Fe alloy layer. In the diffusion alloy plating layer, the Ni coating weight is within a range of 3.0 g/m² or more to less than 8.74 g/m², the Co coating weight is within a range of 0.26 g/m² or more to 1.6 g/m² or less, and the total of the Ni coating weight and the Co coating weight is less than 9.0 g/m². When the surface of the diffusion alloy plating layer is analyzed using X-ray photoelectron spectroscopy, in atom%, Co is 19.5 to 60%, Fe is 0.5 to 30%, and Co + Fe is 20 to 70%. The thickness of the Ni-Fe alloy layer is within a range of 0.3 to 1.3 µm. It is disclosed in Patent Literature 1 that, by this means, a surface-treated steel sheet for a battery container that is excellent in workability while maintaining battery characteristics and liquid leakage resistance is obtained.

International Application Publication No. WO2012/147843 (Patent Literature 2) discloses a surface-treated steel sheet for a battery container in which a nickel-cobalt alloy layer is formed on the outermost surface of a face that is to serve as the inner surface of the battery container. The surface-treated steel sheet for a battery container disclosed in Patent Literature 2 is characterized in that a Co/Ni value obtained by Auger electron spectroscopic analysis on the surface of the nickel-cobalt alloy layer is within a range of 0.1 to 1.5. It is disclosed in Patent Literature 2 that, by this means, a surface-treated steel sheet for a battery container is obtained that is excellent in resistance to dissolution in alkaline solution, and that can secure high battery characteristics which are equal to or higher than those of conventional batteries even after the passage of time.

International Application Publication No. WO2019/083044 (Patent Literature 3) discloses a surface-treated steel sheet that includes a steel sheet and a nickel-cobalt-iron diffusion layer which is formed as an outermost layer on the steel sheet. In the surface-treated steel sheet disclosed in Patent Literature 3, when a Ni intensity, a Co intensity, and an Fe intensity are measured consecutively in the depth direction from the surface side of the nickel-cobalt-iron diffusion layer by radio frequency glow discharge optical emission spectrometry, and a Ni content ratio, a Co content ratio, and an Fe content ratio are determined based on the Ni intensity, the Co intensity, and the Fe intensity, at a specific depth position D at which the Ni intensity is 0.5% with respect to a maximum value in the nickel-cobalt-iron diffusion layer, a Co content ratio In_{Co_D} is 5 mass% or more, and an Fe content ratio In_{Fe_D} is 11 mass% or more. It is disclosed in Patent Literature 3 that, by this means, a surface-treated steel sheet is obtained that, when used as the battery container of a battery that uses a strong alkaline electrolyte, is excellent in battery characteristics and can suppress a decrease in the battery characteristics even after the passage of time.

### CITATION LIST

### PATENT LITERATURE

Patent Literature 1: International Application Publication No. WO2019/159794
Patent Literature 2: International Application Publication No. WO2012/147843
Patent Literature 3: International Application Publication No. WO2019/083044

### SUMMARY OF INVENTION

### TECHNICAL PROBLEM

In this connection, battery containers are required to have excellent strength in order to withstand impacts from the outside. In recent years, surface-treated steel sheets are used not only as containers for primary batteries that are typified by alkaline batteries, but also as containers for secondary batteries that are typified by lithium ion batteries. Secondary batteries may be installed in electric vehicles. A surface-treated steel sheet that is mounted in an electric vehicle as a member of a secondary battery needs to withstand even greater impacts than a surface-treated steel sheet that is used for a primary battery. Therefore, such a surface-treated steel sheet is required to have even more excellent strength. On the other hand, if the strength of the surface-treated steel sheet is too high, in some cases it may not be possible to perform forming (deep drawing and pressing) and the surface-treated steel sheet will crack. Accordingly, the surface-treated steel sheet preferably has strength which is within an appropriate range while also having excellent strength.

However, it may be difficult to increase the strength of a surface-treated steel sheet having a Ni-Co-Fe alloy layer that contains Ni, Co, and Fe. Even in the case of a surface-treated steel sheet having a Ni-Co-Fe alloy layer, it is preferable for the surface-treated steel sheet to have excellent strength.

In the aforementioned Patent Literatures 1 to 3, there is no discussion regarding the strength of a surface-treated steel sheet having a Ni-Co-Fe alloy layer that contains Ni, Co, and Fe. Therefore, even when the techniques disclosed in the aforementioned Patent Literatures 1 to 3 are used, it has in some cases been difficult to increase the strength of a surface-treated steel sheet.

An objective of the present disclosure is to provide a surface-treated steel sheet that has excellent strength even when provided with a Ni-Co-Fe alloy layer.

### SOLUTION TO PROBLEM

A surface-treated steel sheet of the present disclosure includes:
a steel sheet having a microstructure containing: ferrite, and one or more kinds selected from a group consisting of cementite, pearlite, and bainite having an area fraction of 1.2 to 5.0% in total, and
on a steel sheet surface,
a Ni-Co-Fe alloy layer containing Ni, Co, and Fe.

### ADVANTAGEOUS EFFECT OF INVENTION

The surface-treated steel sheet of the present disclosure has excellent strength even when provided with a Ni-Co-Fe alloy layer.

### BRIEF DESCRIPTION OF DRAWINGS

[FIG. 1] FIG. 1 is a cross-sectional diagram illustrating one example of a surface-treated steel sheet of the present embodiment.
[FIG. 2] FIG. 2 is a cross-sectional diagram illustrating one example of a surface-treated steel sheet according to another embodiment that is different from the example in FIG. 1.
[FIG. 3] FIG. 3 is a cross-sectional diagram illustrating one example of an alkaline battery which uses a surface-treated steel sheet 1 of the present embodiment.
[FIG. 4] FIG. 4 is a micrograph of a steel sheet of Test No. 5 in the Examples.
[FIG. 5] FIG. 5 is a graph showing results obtained when concentrations of Ni, Co, and Fe were measured in a thickness direction of the surface-treated steel sheet of the present embodiment from the surface of the surface-treated steel sheet by glow discharge spectrometry (GDS).
[FIG. 6] FIG. 6 is an enlarged view of a range of a depth of 0 to 0.4 µm in the graph in FIG. 5.
[FIG. 7] FIG. 7 is a micrograph of a steel sheet of Test No. 2 in the Examples.

### DESCRIPTION OF EMBODIMENTS

The present inventors conducted studies regarding a surface-treated steel sheet which has excellent strength even when provided with a Ni-Co-Fe alloy layer. The present inventors conducted studies with regard to the microstructure of surface-treated steel sheets provided with a Ni-Co-Fe alloy layer. As a result, the present inventors obtained the following findings.

An example of a method for producing a surface-treated steel sheet that is provided with a Ni-Co-Fe alloy layer is as follows. First, a steel sheet is prepared. Next, a Ni plating layer is formed on the surface of the steel sheet, and a Co plating layer is further formed on the Ni plating layer. Next, the steel sheet having the Ni plating layer and the Co plating layer is subjected to an alloying heat treatment. By performing the alloying heat treatment, Ni in the Ni plating layer, Co in the Co plating layer, and Fe in the steel sheet are thermally diffused together and are alloyed. By this means, a surface-treated steel sheet having a Ni-Co-Fe alloy layer is produced. Temper rolling may be performed after the alloying heat treatment.

Conventionally, surface-treated steel sheets having a Ni plating layer have been used. In some cases, a surface-treated steel sheet having a Ni plating layer includes a Ni-Fe alloy layer in which Ni in the Ni plating layer and Fe in the steel sheet are alloyed. When forming a Ni-Fe alloy layer, the temperature of the alloying heat treatment is relatively low because only Ni and Fe are alloyed.

On the other hand, in the case of forming a Ni-Co-Fe alloy layer which contains Ni, Co, and Fe, it is necessary to also alloy Co in addition to Ni and Fe. Therefore, when forming a Ni-Co-Fe alloy layer it is necessary to further increase the temperature of the alloying heat treatment in comparison to the case of forming a Ni-Fe alloy layer.

As a result of investigations carried out by the present inventors it was found that in a conventional surface-treated steel sheet provided with a Ni-Co-Fe alloy layer, the microstructure of the steel sheet is a ferritic structure, and there is very little precipitation of other phases. The present inventors surmise that this is because a high alloying heat treatment temperature is required in order to form a Ni-Co-Fe alloy layer. Ferrite is soft. Therefore, in the conventional surface-treated steel sheets, it is difficult to increase the strength.

The above findings are summarized as follows. In the case of forming a surface-treated steel sheet which is provided with a Ni-Co-Fe alloy layer, it is necessary to make the alloying heat treatment temperature a high temperature. If the alloying heat treatment temperature is set to a high temperature, the microstructure of the steel sheet becomes a ferritic structure, and there is very little precipitation of other phases. Therefore, it is difficult to increase the strength of the surface-treated steel sheet.

Therefore, the present inventors conceived of the idea of causing a hard structure that could not be obtained in a conventional surface-treated steel sheet provided with a Ni-Co-Fe alloy layer to precipitate in the microstructure of a steel sheet. The strength of a surface-treated steel sheet can be increased by precipitation strengthening with a hard structure.

The present inventors conducted further studies regarding this point. As a result, the present inventors found that, unlike a conventional surface-treated steel sheet provided with a Ni-Co-Fe alloy layer, if the microstructure of a surface-treated steel sheet contains ferrite and one or more kinds selected from a group consisting of cementite, pearlite, and bainite which have an area fraction of 1.2% or more in total, the strength of the surface-treated steel sheet can be increased even if the surface-treated steel sheet is provided with a Ni-Co-Fe alloy layer.

The surface-treated steel sheet of the present embodiment has been completed based on the above findings, and is as follows.

[1] A surface-treated steel sheet, including:
   a steel sheet having a microstructure containing: ferrite, and one or more kinds selected from a group consisting of cementite, pearlite, and bainite having an area fraction of 1.2 to 5.0% in total, and
   on a steel sheet surface,
   a Ni-Co-Fe alloy layer containing Ni, Co, and Fe.
[2] The surface-treated steel sheet according to [1], wherein:
   in a thickness direction of the Ni-Co-Fe alloy layer, a Co concentration in the Ni-Co-Fe alloy layer is highest at a position which is on an outermost surface side of the Ni-Co-Fe alloy layer relative to a position where a Ni concentration in the Ni-Co-Fe alloy layer is highest, and which is between the outermost surface of the Ni-Co-Fe alloy layer and a depth of 100 nm from the outermost surface; and
   in the Ni-Co-Fe alloy layer, a Ni-concentrated region in which the Ni concentration increases toward the outermost surface of the Ni-Co-Fe alloy layer is formed between the outermost surface of the Ni-Co-Fe alloy layer and a position where the Co concentration is highest.
[3] The surface-treated steel sheet according to [1] or [2], wherein:
   in a thickness direction of the Ni-Co-Fe alloy layer, at a position where the Co concentration is highest, a ratio of the Co concentration to the Ni concentration is 3.0 or more.
[4] The surface-treated steel sheet according to any one of [1] to [3], wherein:
   per side of the steel sheet, a content of Ni in the Ni-Co-Fe alloy layer is 1.34 to 5.36 g/m², and a content of Co in the Ni-Co-Fe alloy layer is 0.45 to 1.34 g/m².
[5] The surface-treated steel sheet according to any one of [1] to [3], wherein:
   per side of the steel sheet, a content of Ni in the Ni-Co-Fe alloy layer is 5.36 to 35.6 g/m², and a content of Co in the Ni-Co-Fe alloy layer is 0.45 to 1.34 g/m².
[6] The surface-treated steel sheet according to any one of [1] to [5], wherein a chemical composition of the steel sheet consists of, in mass%:
   C: 0.045 to 0.065%,
   Si: 0.020% or less,
   Mn: 0.25 to 0.35%,
   P: 0.020% or less,
   S: 0.004 to 0.022%,
   sol. Al: 0.005 to 0.025%,
   N: 0.0040% or less,
   B: 0.0015 to 0.0025%,
   Nb: 0 to 0.0050%, and
   Ti: 0 to 0.010%,
   with the balance being Fe and impurities.

The surface-treated steel sheet of the present embodiment is described in detail hereunder.

### [Surface-treated steel sheet]

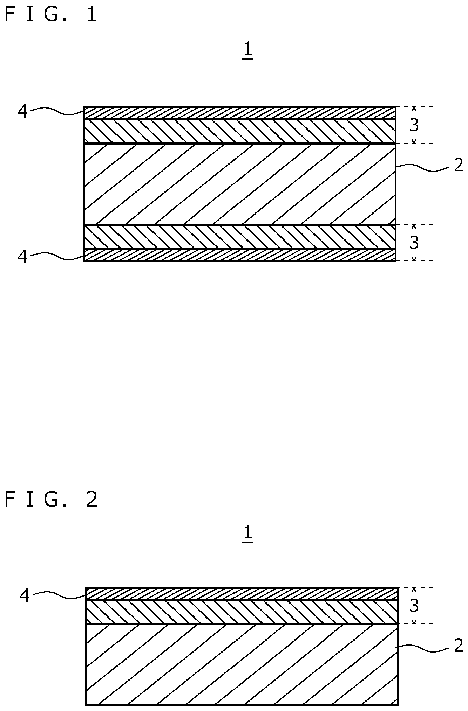

A surface-treated steel sheet of the present embodiment includes a steel sheet, and a Ni-Co-Fe alloy layer containing Ni, Co, and Fe on the steel sheet surface. FIG. 1 is a cross-sectional diagram illustrating one example of the surface-treated steel sheet of the present embodiment. Referring to FIG. 1, a surface-treated steel sheet 1 of the present embodiment includes a steel sheet 2 and a Ni-Co-Fe alloy layer 3. The Ni-Co-Fe alloy layer 3 is arranged on the surface of the steel sheet 2. In FIG. 1, the Ni-Co-Fe alloy layer 3 is arranged on both sides of the steel sheet 2. However, the arrangement of the Ni-Co-Fe alloy layer 3 is not limited to the example illustrated in FIG. 1. As illustrated in FIG. 2, the Ni-Co-Fe alloy layer 3 may be arranged on only one side of the steel sheet 2.

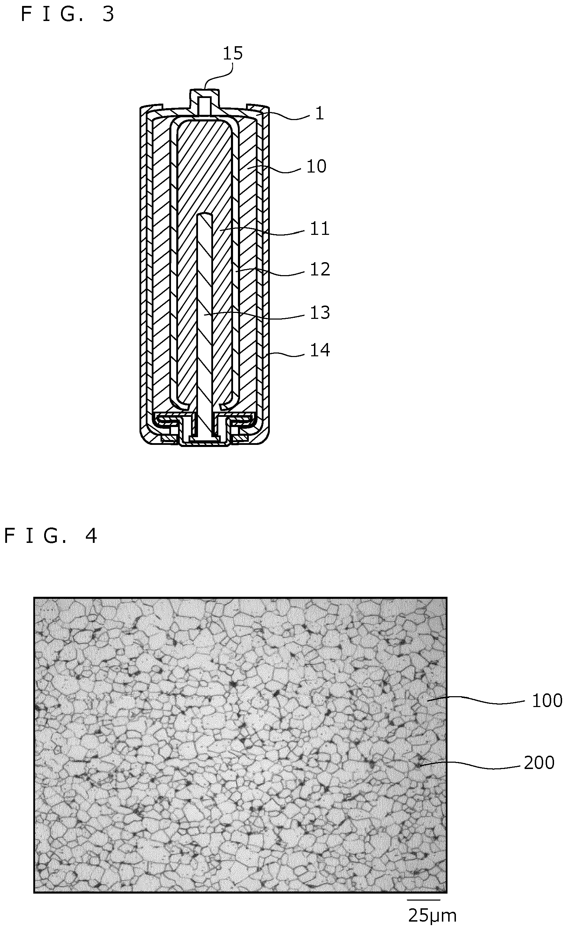

The surface-treated steel sheet 1 of the present embodiment can be used for battery applications with respect to primary batteries and secondary batteries. The term "primary battery" refers to, for example, an alkaline battery and a manganese battery. The term "secondary battery" refers to, for example, a lithium ion battery. FIG. 3 is a cross-sectional diagram illustrating an example of an alkaline battery which uses the surface-treated steel sheet 1 of the present embodiment. Referring to FIG. 3, the surface-treated steel sheet 1 is processed into the shape of a battery container. Manganese dioxide 10 that is a positive electrode, zinc 11 that is a negative electrode, a separator 12, and a current collector 13 are enclosed inside the container formed of the surface-treated steel sheet 1. The positive electrode 10 and the negative electrode 11 are immersed in an electrolyte. The outer side of the container formed by the surface-treated steel sheet 1 is covered with an insulator 14. A protrusion at the top part of the alkaline battery in FIG. 3 is a positive electrode terminal 15. When used as a battery container, the surface-treated steel sheet 1 functions as a battery container and as a current collector. In a case where the Ni-Co-Fe alloy layer 3 is arranged on only one side of the steel sheet 2, it is preferable that the Ni-Co-Fe alloy layer 3 is arranged on the inner side of the battery container.

### [Preferable thickness of surface-treated steel sheet]

Although the thickness of the surface-treated steel sheet 1 of the present embodiment is not particularly limited, for example the thickness is 0.05 to 2.0 mm. In the case of use for a battery such as an alkaline battery, for example, the thickness is 0.1 to 1.0 mm. The thickness of the surface-treated steel sheet 1 can be measured by a well-known method. The thickness of the surface-treated steel sheet 1 is measured using, for example, a micrometer.

### [Steel sheet]

### [Microstructure of steel sheet]

The steel sheet 2 of the present embodiment has a microstructure containing ferrite and one or more kinds selected from the group consisting of cementite, pearlite, and bainite. The microstructure of the steel sheet 2 is a microstructure that is principally composed of ferrite. Here, the phrase "microstructure that is principally composed of ferrite" means a microstructure containing ferrite having an area fraction of 95.0 to 98.8%. A lower limit of the area fraction of ferrite is preferably 96.0%, and more preferably is 97.0%. An upper limit of the area fraction of ferrite is preferably 98.8%, more preferably is 98.6%, further preferably is 98.4%, further preferably is 98.0%, and further preferably is 97.5%.

In the present embodiment, one or more kinds selected from the group consisting of cementite, pearlite, and bainite are caused to precipitate in the microstructure that is principally composed of ferrite, to thereby increase the strength of the surface-treated steel sheet 1 by precipitation strengthening. If the area fractions of cementite, pearlite, and bainite are less than 1.2% in total, the strength of the surface-treated steel sheet 1 cannot be increased. On the other hand, if the area fractions of cementite, pearlite, and bainite are more than 5.0% in total, the ductility of the surface-treated steel sheet 1 will decrease. Accordingly, the total of the area fractions of cementite, pearlite, and bainite is to be within the range of 1.2 to 5.0%. A preferable lower limit of the total of the area fractions of cementite, pearlite, and bainite is 1.4%, more preferably is 1.6%, further preferably is 2.0%, and further preferably is 2.5%. A preferable upper limit of the total of the area fractions of cementite, pearlite, and bainite is 4.0%, and more preferably is 3.0%. The microstructure of the steel sheet 2 of the present embodiment may be a microstructure containing one or more kinds selected from the group consisting of cementite, pearlite, and bainite which have an area fraction of 1.2 to 5.0% in total, with the balance being ferrite.

### [Method for measuring total area fraction of cementite, pearlite, and bainite in steel sheet]

The total area fraction of cementite, pearlite, and bainite in the steel sheet 2 is measured by the following method. The surface-treated steel sheet 1 is cut parallel to the rolling direction of the surface-treated steel sheet 1 and in the thickness direction of the surface-treated steel sheet 1 to obtain an observation surface. The observation surface is mirror-polished with an abrasive cloth sheet. The mirror-polished observation surface is etched using a nital solution (3% nitric acid-ethanol solution). The observation surface after etching is observed with an optical microscope at a magnification of × 100. The center of the observation visual field and a position (1/2T) at one half of a thickness T of the surface-treated steel sheet 1 are caused to coincide. FIG. 4 is a micrograph of a steel sheet of Test No. 5 in the Examples. Referring to FIG. 4, the black microstructure is cementite, pearlite, or bainite 200. The white microstructure is ferrite 100. An optical micrograph is created from the observation of the optical microscope. The obtained optical micrograph is subjected to black-and-white binarization by setting a threshold value so that all of the black microstructure is detected. The areas of the black regions are added together to obtain the total area fraction (%) of cementite, pearlite, and bainite. The measurement is performed at five arbitrary locations on the surface-treated steel sheet 1. The arithmetic average of the values obtained at the five locations is adopted as the total area fraction (%) of cementite, pearlite, and bainite.

### [Chemical composition of steel sheet]

The steel sheet 2 has the following chemical composition. Note that, in the following description of the chemical composition, unless otherwise noted, the symbol "%" means "mass%".

### C: 0.045 to 0.065%

Carbon (C) promotes the formation of cementite, pearlite, and bainite, and thereby increases the strength of the surface-treated steel sheet 1. C also forms carbides and refines the grains, and thereby increases the strength of the surface-treated steel sheet 1. If the content of C is too low, the aforementioned effects will not be obtained. On the other hand, if the content of C is too high, cementite, pearlite, and bainite will be excessively formed, and the ductility of the surface-treated steel sheet 1 will decrease. Accordingly, the content of C is to be 0.045 to 0.065%. A preferable lower limit of the content of C is 0.048%, more preferably is 0.050%, and further preferably is 0.052%. A preferable upper limit of the content of C is 0.062%, more preferably is 0.060%, and further preferably is 0.058%.

### Si: 0.020% or less

Silicon (Si) is an impurity. If the content of Si is more than 0.020%, the surface properties will deteriorate. Accordingly, the content of Si is to be 0.020% or less. A preferable upper limit of the content of Si is 0.018%, more preferably is 0.015%, and further preferably is 0.013%. The content of Si may be 0%. However, excessively reducing the content of Si will increase the production cost. When taking into consideration the cost when industrially producing the surface-treated steel sheet 1, a preferable lower limit of the content of Si is 0.001%, more preferably is 0.005%, and further preferably is 0.010%.

### Mn: 0.25 to 0.35%

Manganese (Mn) forms MnS with sulfur (S) and thereby improves the hot workability of the surface-treated steel sheet 1. If the content of Mn is less than 0.25%, this effect cannot be obtained. On the other hand, if the content of Mn is more than 0.35%, MnS will excessively form, and the hot workability of the surface-treated steel sheet 1 will, on the contrary, deteriorate. Accordingly, the content of Mn is to be 0.25 to 0.35%. A preferable lower limit of the content of Mn is 0.28%, and more preferably is 0.30%. A preferable upper limit of the content of Mn is 0.32%.

### P: 0.020% or less

Phosphorus (P) is an impurity that is unavoidably contained in the steel. That is, the content of P is more than 0%. If the content of P is more than 0.020%, the steel sheet 2 will become brittle and the ductility of the surface-treated steel sheet 1 will decrease. Accordingly, the content of P is to be 0.020% or less. A preferable upper limit of the content of P is 0.015%, more preferably is 0.010%, and further preferably is 0.005%. The lower the content of P is, the more preferable it is. However, excessively reducing the content of P will increase the production cost. When taking into consideration the cost when industrially producing the surface-treated steel sheet 1, a preferable lower limit of the content of P is 0.001%, more preferably is 0.002%, and further preferably is 0.003%.

### S: 0.004 to 0.022%

Sulfur (S) is an impurity. If the content of S is more than 0.022%, MnS will be excessively formed, and the hot workability of the surface-treated steel sheet 1 will deteriorate. Furthermore, if the content of S is more than 0.022%, the toughness of the surface-treated steel sheet 1 will significantly decrease. The lower the content of S is, the more preferable it is. However, in the case of ultra-low sulfur where the content of S of less than 0.004%, the cost in the steelmaking process will increase. Accordingly, the content of S is to be 0.004 to 0.022%. A preferable lower limit of the content of S is 0.005%, more preferably is 0.008%, and further preferably is 0.010%. A preferable upper limit of the content of S is 0.020%, more preferably is 0.018%, and further preferably is 0.015%.

### Sol. Al: 0.005 to 0.025%

Aluminum (Al) deoxidizes the steel. Al also forms AlN with dissolved N in the steel and thereby fixes dissolved N. By this means, Al suppresses age hardening. If the content of Al is less than 0.005%, the aforementioned effect cannot be obtained. On the other hand, if the content of Al is more than 0.025%, alumina clusters will form in the steel sheet 2, and flaws will occur on the surface of the steel sheet 2. Accordingly, the content of Al is to be 0.005 to 0.025%. A preferable lower limit of the content of Al is 0.008%, more preferably is 0.010%, and further preferably is 0.015%. A preferable upper limit of the content of Al is 0.023%, more preferably is 0.020%, and further preferably is 0.018%. In the present embodiment, "Al" means sol. Al (acid-soluble Al).

### N: 0.0040% or less

Nitrogen (N) is an impurity that is unavoidably contained in the steel. Therefore, the content of N is more than 0%. If the content of N is more than 0.0040%, the steel sheet 2 will undergo age hardening. Consequently, the ductility of the surface-treated steel sheet 1 will decrease. Therefore, the content of N is to be 0.0040% or less. A preferable upper limit of the content of N is 0.0035%, more preferably is 0.0030%, further preferably is 0.0025%, and further preferably is 0.0020%. The lower the content of N is, the more preferable it is. However, excessively reducing the content of N will increase the production cost. Therefore, when taking into consideration the cost when industrially producing the surface-treated steel sheet 1, a preferable lower limit of the content of N is 0.0001%, more preferably is 0.0005%, and further preferably is 0.0010%.

### B: 0.0015 to 0.0025%

Boron (B) forms BN with dissolved N and thereby fixes dissolved N. By this means, B suppresses age hardening. If the content of B is less than 0.0015%, the aforementioned effect cannot be obtained. On the other hand, if the content of B is more than 0.0025%, the aforementioned effect will be saturated, and in addition, B carbides will form and the toughness of the surface-treated steel sheet 1 will decrease. Accordingly, the content of B is to be 0.0015 to 0.0025%. A preferable lower limit of the content of B is 0.0018%, and more preferably is 0.0020%. A preferable upper limit of the content of B is 0.0023%, and more preferably is 0.0020%.

The balance in the chemical composition of the steel sheet 2 of the present embodiment is Fe and impurities. Here, the term "impurities" refers to elements which, when industrially producing the steel sheet 2, are mixed in from ore or scrap that is used as a raw material, or from the production environment or the like, and which are allowed within a range that does not adversely affect the surface-treated steel sheet 1 of the present embodiment. An impurity in the steel sheet 2 is, for example, O (oxygen).

### [Optional elements]

The steel sheet 2 of the present embodiment may further contain one or more elements selected from the group consisting of Nb and Ti in lieu of a part of Fe.

### Nb: 0 to 0.0050%

Niobium (Nb) is an optional element, and need not be contained. That is, the content of Nb may be 0%. When contained, Nb combines with C to form carbides. By this means, grains are refined, which increases the strength of the surface-treated steel sheet 1. On the other hand, if the content of Nb is more than 0.0050%, carbides will be excessively formed and the ductility of the surface-treated steel sheet 1 will decrease. Accordingly, the content of Nb is to be 0 to 0.0050%. A preferable lower limit of the content of Nb is 0.0001%, more preferably is 0.0005%, and further preferably is 0.0010%. A preferable upper limit of the content of Nb is 0.0045%, more preferably is 0.0040%, and further preferably is 0.0030%.

### Ti: 0 to 0.010%

Titanium (Ti) is an optional element, and need not be contained. That is, the content of Ti may be 0%. When contained, Ti combines with C to form carbides. By this means, grains are refined, which increases the strength of the surface-treated steel sheet 1. On the other hand, if the content of Ti is more than 0.010%, carbides will be excessively formed and the ductility of the surface-treated steel sheet 1 will decrease. Accordingly, the content of Ti is to be 0 to 0.010%. A preferable lower limit of the content of Ti is 0.001%, more preferably is 0.003%, and further preferably is 0.005%. A preferable upper limit of the content of Ti is 0.008%, and more preferably is 0.005%.

### [Ni-Co-Fe alloy layer]

The Ni-Co-Fe alloy layer 3 contains Ni, Co, and Fe. Each of Ni, Co, and Fe may be present partially in the thickness direction of the Ni-Co-Fe alloy layer 3 or may be present over the whole area in the thickness direction of the Ni-Co-Fe alloy layer 3. In other words, in the surface-treated steel sheet 1 of the present embodiment, Ni, Co and Fe need not be continuously contained over the whole area in the thickness direction of the Ni-Co-Fe alloy layer 3.

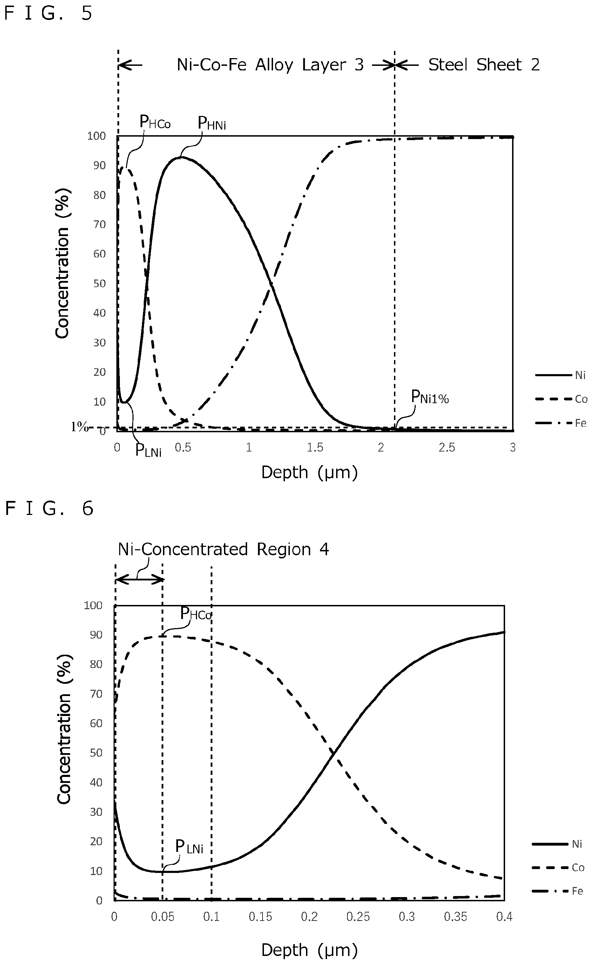

FIG. 5 is a graph showing results obtained when the concentrations of Ni, Co, and Fe in the surface-treated steel sheet 1 of the present embodiment were measured in the thickness direction from the surface of the surface-treated steel sheet 1 by glow discharge spectrometry (GDS). The measurement conditions used for the GDS will be described later. The ordinate in FIG. 5 represents the concentrations (%) of Ni, Co, and Fe converted from emission intensities obtained by the GDS. The abscissa in FIG. 5 represents the depth (µm) from the surface of the surface-treated steel sheet 1 (that is, the outermost surface of the Ni-Co-Fe alloy layer) obtained by conversion from the Ar sputtering time.

Referring to FIG. 5, when the concentrations of Ni, Co, and Fe are measured by GDS from the surface of the surface-treated steel sheet 1 in the thickness direction of the surface-treated steel sheet, a region from the surface of the surface-treated steel sheet 1 to a position P_{Nil%} where the Ni concentration becomes 1% is defined as the Ni-Co-Fe alloy layer 3.

### [Preferable thickness of Ni-Co-Fe alloy layer]

The thickness of the Ni-Co-Fe alloy layer 3 is not particularly limited, and is appropriately set according to the intended use. The thickness of the Ni-Co-Fe alloy layer 3 is, for example, 0.1 to 10.0 µm. When the intended use is for an alkaline battery, the thickness of the Ni-Co-Fe alloy layer 3 is, for example, 0.1 to 5.0 µm.

### [Method for identifying Ni-Co-Fe alloy layer and method for determining thickness]

The Ni-Co-Fe alloy layer 3 is identified by the following method. The Ni concentration, the Co concentration, and the Fe concentration are measured by glow discharge spectrometry (GDS) in the thickness direction of the surface-treated steel sheet 1 from the surface of the surface-treated steel sheet 1. A radio frequency glow discharge optical emission spectrometer is used for the measurement. The emission intensity of Ni, the emission intensity of Co, and the emission intensity of Fe are converted to the content of Ni (mass%), the content of Co (mass%), and the content of Fe (mass%), respectively. A sum of the obtained content of Ni (mass%), content of Co (mass%), and content of Fe (mass%) is taken as 100%, and the proportion (%) of Ni, the proportion (%) of Co, and the proportion (%) of Fe are determined. The obtained proportion (%) of Ni, proportion (%) of Co, and proportion (%) of Fe are adopted as the Ni concentration (%), Co concentration (%), and Fe concentration (%), respectively. The GDS measurement conditions are as follows.
H.V.: 785 V for Fe, 630 V for Ni, 720 V for Co
Anode diameter: ϕ 4 mm
Gas: Ar
Gas pressure: 600 Pa
Output: 35 W

Measurement data for which the depth obtained by conversion from the Ar sputtering time is less than 0.006 µm (6 nm) may include noise due to reasons such as the signal being unstable. That is, in the case of measurement data for which the depth obtained by conversion from the Ar sputtering time is less than 0.006 µm (6 nm), the Ni-Co-Fe alloy layer 3 may not necessarily be accurately measured. Therefore, in the GDS measurement of the surface-treated steel sheet 1 of the present embodiment, only data for which the depth obtained by conversion from the Ar sputtering time is 0.006 µm or more is used. Specifically, a point at which the depth obtained by conversion from the Ar sputtering time first becomes 0.006 µm or more is taken as a depth of 0 µm.

GDS measurement is performed under the aforementioned conditions, and a region from the surface of the surface-treated steel sheet 1 to a position P_{Nil%} where the Ni concentration is 1% is taken as the Ni-Co-Fe alloy layer 3. If multiple positions where the Ni concentration is 1% exist, a position where the Ni concentration is 1% that is nearest on the steel sheet 2 side is taken as the boundary between the Ni-Co-Fe alloy layer 3 and the steel sheet 2. The distance from the surface of the surface-treated steel sheet 1 to the position where the Ni concentration is 1% is taken as the thickness (µm) of the Ni-Co-Fe alloy layer 3.

As described above, the surface-treated steel sheet 1 of the present embodiment includes: a steel sheet having a microstructure containing ferrite and one or more kinds selected from the group consisting of cementite, pearlite, and bainite which have an area fraction of 1.2 to 5.0% in total; and, on the steel sheet surface, the Ni-Co-Fe alloy layer 3 that contains Ni, Co, and Fe. Thus, the surface-treated steel sheet 1 of the present embodiment has excellent strength even when the surface-treated steel sheet 1 includes the Ni-Co-Fe alloy layer 3.

### [Preferable form of Ni-Co-Fe alloy layer]

Referring to FIG. 5, the boundary between the steel sheet 2 and the Ni-Co-Fe alloy layer 3 is a position (P_{Nil%}) where the Ni concentration is 1%. That is, the position (P_{Nil%}) where the Ni concentration is 1% is the surface of the steel sheet 2. The Ni concentration increases in the direction from the surface of the steel sheet 2 toward the outermost surface of the Ni-Co-Fe alloy layer 3, and the Ni concentration is highest at a certain position (P_{HNi}). Preferably, in the thickness direction of the Ni-Co-Fe alloy layer 3, the Co concentration in the Ni-Co-Fe alloy layer is highest at a position (P_{HCo}) which is on the outermost surface side of the Ni-Co-Fe alloy layer 3 relative to the position (P_{HNi}) where the Ni concentration is highest in the Ni-Co-Fe alloy layer 3. Hereunder, the position where, in the thickness direction of the Ni-Co-Fe alloy layer 3, the Ni concentration in the Ni-Co-Fe alloy layer is highest is also referred to as a "position P_{HNi}", and the position where the Co concentration in the Ni-Co-Fe alloy layer is highest is also referred to as a "position P_{HCo}".

FIG. 6 is an enlarged view of a range from a depth of 0 to 0.4 µm in the graph in FIG. 5. Referring to FIG. 6, preferably, in the thickness direction of the Ni-Co-Fe alloy layer 3, the Co concentration in the Ni-Co-Fe alloy layer 3 is highest between the outermost surface of the Ni-Co-Fe alloy layer 3 and a depth of 100 nm.

In the thickness direction of the Ni-Co-Fe alloy layer 3, if the Co concentration is highest at a position which is on the outermost surface side of the Ni-Co-Fe alloy layer 3 relative to the position (P_{HNi}) where the Ni concentration is highest and which is in the outer layer of the Ni-Co-Fe alloy layer 3, the contact resistance of the surface-treated steel sheet 1 can be lowered. By this means, a battery in which the surface-treated steel sheet 1 is used can discharge with a large current.

### [Ni-concentrated region]

Preferably, the Ni-Co-Fe alloy layer 3 of the present embodiment has a Ni-concentrated region 4. The term "Ni-concentrated region 4" refers to a region which, in the thickness direction of the Ni-Co-Fe alloy layer 3, is between the outermost surface of the Ni-Co-Fe alloy layer 3 and a position (P_{LNi}) where the Ni concentration is lowest within a range from the position (P_{HNi}) where the Ni concentration is highest to the outermost surface of the Ni-Co-Fe alloy layer 3, and which is a region in which the Ni concentration increases toward the outermost surface of the Ni-Co-Fe alloy layer 3. Preferably, the Ni-concentrated region 4 is located between the outermost surface of the Ni-Co-Fe alloy layer 3 and the position P_{HCo}. By increasing the Ni concentration in the vicinity of the outermost surface of the Ni-Co-Fe alloy layer 3, oxidation of Co in the vicinity of the outermost surface of the Ni-Co-Fe alloy layer 3 is suppressed. As a result, discoloration of the surface of the surface-treated steel sheet 1 can be suppressed. Note that, in a case where the Ni-Co-Fe alloy layer 3 includes the Ni-concentrated region 4, the highest Ni concentration in the Ni-concentrated region 4 is lower than the highest Ni concentration in the Ni-Co-Fe alloy layer 3.

Referring to FIG. 5, the Ni concentration decreases in the direction from the position (P_{HNi}) where the Ni concentration in the Ni-Co-Fe alloy layer 3 is highest toward the outermost surface of the Ni-Co-Fe alloy layer 3. Further, at a position (P_{LNi}) that is between the position (P_{HNi}) where the Ni concentration in the Ni-Co-Fe alloy layer 3 is highest and the outermost surface of the Ni-Co-Fe alloy layer 3, the Ni concentration is a local minimum value. In a case where the surface-treated steel sheet 1 includes the Ni-concentrated region 4, the Ni concentration increases from the point (P_{LNi}) where the Ni concentration is a local minimum value to the outermost surface of the Ni-Co-Fe alloy layer 3. In a case where the surface-treated steel sheet 1 includes the Ni-concentrated region 4, in the Ni-concentrated region 4, the Ni concentration continues to increase until the outermost surface of the Ni-Co-Fe alloy layer 3. In the Ni-concentrated region 4, in the direction from the point (P_{LNi}) where the Ni concentration is a local minimum value toward the outermost surface of the Ni-Co-Fe alloy layer 3, although the Ni concentration may temporarily not change, the Ni concentration does not decrease.

Referring to FIG. 5 and FIG. 6, the position (P_{HCo}) where the Co concentration in the Ni-Co-Fe alloy layer 3 is highest and the position (P_{LNi}) where the Ni concentration is a local minimum value coincide. However, in some cases, depending on the diffusion state of Fe in the Ni-Co-Fe alloy layer 3, the position (P_{HCo}) where the Co concentration is highest and the position (P_{LNi}) where the Ni concentration is a local minimum value do not coincide.

### [Preferable thickness of Ni-concentrated region]

The thickness of the Ni-concentrated region 4 is preferably 0.01 to 0.15 µm. A more preferable lower limit of the thickness of the Ni-concentrated region 4 is 0.02 µm, further preferably is 0.03 µm, further preferably is 0.04 µm, further preferably is 0.05 µm, and further preferably is 0.06 µm. A more preferable upper limit of the thickness of the Ni-concentrated region 4 is 0.12 µm, further preferably is 0.11 µm, further preferably is 0.10 µm, further preferably is 0.09 µm, further preferably is 0.08 µm, further preferably is 0.07 µm, and further preferably is 0.06 µm.

### [Method for identifying Ni-concentrated region and method for measuring thickness thereof]

The Ni-concentrated region 4 is identified and the thickness of the Ni-concentrated region 4 is measured by the following method. The surface-treated steel sheet 1 is subjected to GDS measurement by the method described above, and a region which, in the thickness direction of the Ni-Co-Fe alloy layer 3, is between the outermost surface of the Ni-Co-Fe alloy layer 3 and a position (P_{LNi}) where the Ni concentration is lowest within a range from a position (P_{HNi}) where the Ni concentration is highest to the outermost surface of the Ni-Co-Fe alloy layer 3, and which is a region in which the Ni concentration increases toward the outermost surface of the Ni-Co-Fe alloy layer 3 is identified. The thickness of this region is defined as the thickness (µm) of the Ni-concentrated region 4. That is, a distance in the thickness direction of the Ni-Co-Fe alloy layer 3 from the aforementioned position (P_{LNi}) where the Ni concentration is a local minimum value to the outermost surface of the Ni-Co-Fe alloy layer 3 is defined as the thickness (µm) of the Ni-concentrated region 4.

### [Preferable Ni concentration in outermost surface of Ni-Co-Fe alloy layer]

If the Ni concentration in the outermost surface of the Ni-Co-Fe alloy layer 3 is 10% or more, discoloration of the surface-treated steel sheet 1 can be suppressed more stably. On the other hand, if the Ni concentration in the outermost surface of the Ni-Co-Fe alloy layer 3 is 90% or less, low contact resistance of the surface-treated steel sheet 1 can be more stably maintained. Therefore, the Ni concentration in the outermost surface of the Ni-Co-Fe alloy layer 3 is preferably 10 to 90%. A more preferable lower limit of the Ni concentration in the outermost surface of the Ni-Co-Fe alloy layer 3 is 20%, and further preferably is 30%. A more preferable upper limit of the Ni concentration in the outermost surface of the Ni-Co-Fe alloy layer 3 is 80%, further preferably is 70%, and further preferably is 60%.

The Ni concentration in the outermost surface of the Ni-Co-Fe alloy layer 3 is the Ni concentration at the initial depth at which a depth obtained by conversion from the Ar sputtering time is 0.006 µm or more when the Ni concentration, the Co concentration, and the Fe concentration are measured by GDS according to the method described above. As described above, in the case of measurement data for which the depth obtained by conversion from the Ar sputtering time is less than 0.006 µm, the Ni-Co-Fe alloy layer 3 may not necessarily be accurately measured, and for this reason such measurement data is removed from the object of analysis.

### [Preferable Co concentration/Ni concentration ratio]

A ratio of the Co concentration to the Ni concentration at the position P_{HCo} is not particularly limited. However, if the ratio of the Co concentration to the Ni concentration is high at the position (P_{HCo}) where the Co concentration is highest, the contact resistance of the surface-treated steel sheet 1 can be easily maintained at a low level. Therefore, at the position (P_{HCo}) where the Co concentration is highest in the thickness direction of the Ni-Co-Fe alloy layer 3, a preferable lower limit of the ratio of the Co concentration to the Ni concentration is 0.5, more preferably is 1.0, further preferably is 2.0, further preferably is 3.0, further preferably is 4.0, further preferably is 5.0, and further preferably is 5.5. A preferable upper limit of the ratio of the Co concentration to the Ni concentration at the position (P_{HCo}) where the Co concentration is highest in the thickness direction of the Ni-Co-Fe alloy layer 3 is 10.0, more preferably is 9.5, and further preferably is 9.0.

### [Method for measuring Co concentration/Ni concentration ratio]

The Co concentration/Ni concentration ratio is measured by the following method. GDS measurement is performed by the method described above. The Ni concentration and the Co concentration are measured at the position (P_{HCo}) where the Co concentration is highest in the thickness direction of the Ni-Co-Fe alloy layer. The obtained Co concentration is divided by the Ni concentration to calculate the Co concentration/Ni concentration ratio.

Referring to FIG. 5, the Fe concentration in the Ni-Co-Fe alloy layer 3 decreases in the direction from the steel sheet 2 toward the outermost surface of the Ni-Co-Fe alloy layer 3. Hereunder, a case where Fe is diffused up to the outermost surface of the Ni-Co-Fe alloy layer 3 is also referred to as "complete diffusion". Further, a case where Fe is not diffused up to the outermost surface of the Ni-Co-Fe alloy layer 3 is also referred to as "partial diffusion". In the Ni-Co-Fe alloy layer 3 of the surface-treated steel sheet 1 of the present embodiment, Fe may be completely diffused or may be partially diffused.

### [Preferable content of Ni and preferable content of Co in Ni-Co-Fe alloy layer 3]

Preferably, the content of Ni and the content of Co in the Ni-Co-Fe alloy layer 3 per side of the steel sheet 2 are as follows.

### Content of Ni in Ni-Co-Fe alloy layer 3: 1.34 to 35.6 g/m²

If the content of Ni in the Ni-Co-Fe alloy layer 3 is 1.34 g/m² or more, a corrosion resistance of the surface-treated steel sheet 1 will be enhanced. On the other hand, even if the content of Ni in the Ni-Co-Fe alloy layer 3 is more than 35.6 g/m², the corrosion resistance of the surface-treated steel sheet 1 will be saturated. If the content of Ni in the Ni-Co-Fe alloy layer 3 is 35.6 g/m² or less, the cost can be suppressed. Therefore, the content of Ni in the Ni-Co-Fe alloy layer 3 may be 1.34 to 35.6 g/m². A preferable lower limit of the content of Ni in the Ni-Co-Fe alloy layer 3 is 5.36 g/m², and more preferably is 8.93 g/m². A preferable upper limit of the content of Ni in the Ni-Co-Fe alloy layer 3 is 26.8 g/m², and more preferably is 17.9 g/m².

### Content of Co in Ni-Co-Fe alloy layer 3: 0.45 to 1.34 g/m²

If the content of Co in the Ni-Co-Fe alloy layer 3 is 0.45 g/m² or more, the contact resistance of the surface-treated steel sheet 1 can be easily maintained at a low level. On the other hand, if the content of Co in the Ni-Co-Fe alloy layer 3 is 1.34 g/m² or less, the resistance of the Ni-Co-Fe alloy layer 3 to dissolution in an alkaline electrolyte will increase. Therefore, the content of Co in the Ni-Co-Fe alloy layer 3 may be 0.45 to 1.34 g/m². A preferable lower limit of the content of Co in the Ni-Co-Fe alloy layer 3 is 0.54 g/m², and more preferably is 0.63 g/m². A preferable upper limit of the content of Co in the Ni-Co-Fe alloy layer 3 is 1.11 g/m², and more preferably is 0.89 g/m².

### [Preferable content of Ni and preferable content of Co in Ni-Co-Fe alloy layer 3 in case of complete diffusion]

In the case of complete diffusion, preferably the content of Ni and the content of Co in the Ni-Co-Fe alloy layer 3 per side of the steel sheet 2 are as follows.

### Content of Ni in Ni-Co-Fe alloy layer 3 in case of complete diffusion: 1.34 to 5.36 g/m²

If the content of Ni in the Ni-Co-Fe alloy layer 3 is 1.34 g/m² or more, the corrosion resistance of the surface-treated steel sheet 1 will be enhanced. On the other hand, if the content of Ni in the Ni-Co-Fe alloy layer 3 is 5.36 g/m² or less, it is easy for Fe to diffuse up to the outermost surface of the Ni-Co-Fe alloy layer 3. Therefore, when Fe is to be completely diffused in the Ni-Co-Fe alloy layer 3, it is preferable that the content of Ni in the Ni-Co-Fe alloy layer 3 is 1.34 to 5.36 g/m². In the case of complete diffusion, a more preferable lower limit of the content of Ni in the Ni-Co-Fe alloy layer 3 is 2.23 g/m², and further preferably is 3.12 g/m². In the case of complete diffusion, a more preferable upper limit of the content of Ni in the Ni-Co-Fe alloy layer 3 is 4.45 g/m², and further preferably is 3.56 g/m².

### Content of Co in Ni-Co-Fe alloy layer 3 in case of complete diffusion: 0.45 to 1.34 g/m²

If the content of Co in the Ni-Co-Fe alloy layer 3 is 0.45 g/m² or more, the contact resistance of the surface-treated steel sheet 1 can be easily maintained at a low level. On the other hand, if the content of Co in the Ni-Co-Fe alloy layer 3 is 1.34 g/m² or less, the resistance of the Ni-Co-Fe alloy layer 3 to dissolution in an alkaline electrolyte will increase. Therefore, the content of Co in the Ni-Co-Fe alloy layer 3 in the case of complete diffusion may be 0.45 to 1.34 g/m². A preferable lower limit of the content of Co in the Ni-Co-Fe alloy layer 3 in the case of complete diffusion is 0.54 g/m², and more preferably is 0.63 g/m². A preferable upper limit of the content of Co in the Ni-Co-Fe alloy layer 3 in the case of complete diffusion is 1.11 g/m², and more preferably is 0.89 g/m².

### [Preferable content of Ni and preferable content of Co in Ni-Co-Fe alloy layer 3 in case of partial diffusion]

In the case of partial diffusion, preferably the content of Ni and the content of Co in the Ni-Co-Fe alloy layer 3 per side of the steel sheet 2 are as follows.

### Content of Ni in Ni-Co-Fe alloy layer 3 in case of partial diffusion: 5.36 to 35.6 g/m²

If the content of Ni in the Ni-Co-Fe alloy layer 3 is 5.36 g/m² or more, it will be easy to produce the Ni-Co-Fe alloy layer 3 in which Fe is partially diffused. On the other hand, if the content of Ni in the Ni-Co-Fe alloy layer 3 is 35.6 g/m² or less, the cost can be suppressed. Therefore, in a case where Fe is to be partially diffused in the Ni-Co-Fe alloy layer 3, preferably the content of Ni in the Ni-Co-Fe alloy layer 3 is 5.36 to 35.6 g/m². In the case of partial diffusion, a more preferable lower limit of the content of Ni in the Ni-Co-Fe alloy layer 3 is 8.93 g/m², and further preferably is 17.9 g/m². In the case of partial diffusion, a more preferable upper limit of the content of Ni in the Ni-Co-Fe alloy layer 3 is 31.3 g/m², and further preferably is 22.3 g/m².

### Content of Co in Ni-Co-Fe alloy layer 3 in case of partial diffusion: 0.45 to 1.34 g/m²

If the content of Co in the Ni-Co-Fe alloy layer 3 is 0.45 g/m² or more, the contact resistance of the surface-treated steel sheet 1 can be easily maintained at a low level. On the other hand, if the content of Co in the Ni-Co-Fe alloy layer 3 is 1.34 g/m² or less, the resistance of the Ni-Co-Fe alloy layer 3 to dissolution in an alkaline electrolyte will increase. Therefore, the content of Co in the Ni-Co-Fe alloy layer 3 in the case of partial diffusion may be 0.45 to 1.34 g/m². A preferable lower limit of the content of Co in the Ni-Co-Fe alloy layer 3 in the case of partial diffusion is 0.54 g/m², and more preferably is 0.63 g/m². A preferable upper limit of the content of Co in the Ni-Co-Fe alloy layer 3 in the case of partial diffusion is 1.11 g/m², and more preferably is 0.89 g/m².

The chemical composition of the Ni-Co-Fe alloy layer 3 of the surface-treated steel sheet 1 of the present embodiment may be a chemical composition consisting of Co, Ni, Fe and impurities. The impurities are, for example, one or more elements selected from the group consisting of carbon (C), oxygen (O), aluminum (Al), silicon (Si), phosphorus (P), and sulfur (S). In some cases, for example, the impurities are contained in an amount of 0.1 mass% or less in total.

### [Method for measuring content of Ni and content of Co in Ni-Co-Fe alloy layer]

The content of Ni and the content of Co in the Ni-Co-Fe alloy layer 3 are measured by the following method. The surface-treated steel sheet 1 including the Ni-Co-Fe alloy layer 3 is prepared. The Ni-Co-Fe alloy layer 3 of the surface-treated steel sheet 1 is subjected to elemental analysis using a fluorescent X-ray analyzer. The fluorescent X-ray analyzer is used to prepare a calibration curve in advance using a standard sample having a known content of Ni and a standard sample having a known content of Co. The content of Ni (g/m²) and the content of Co (g/m²) in the Ni-Co-Fe alloy layer 3 are determined based on the calibration curve.

### [Preferable strength of surface-treated steel sheet]

The strength of the surface-treated steel sheet 1 of the present embodiment is not particularly limited. However, preferably the strength of the surface-treated steel sheet 1 is a tensile strength TS of 380 MPa or more. A lower limit of the tensile strength TS of the surface-treated steel sheet 1 is more preferably 390 MPa, and further preferably is 400 MPa. An upper limit of the tensile strength TS of the surface-treated steel sheet 1 is preferably 440 MPa.

### [Method for measuring strength of surface-treated steel sheet]

The strength of the surface-treated steel sheet 1 is measured by the following method. The surface-treated steel sheet 1 is subjected to a tensile test by a method in accordance with JIS Z2241 (2011). Specifically, a sheet-shaped test specimen is taken from the center of the sheet width in a direction that is parallel to the rolling direction of the surface-treated steel sheet 1. The size of the sheet-shaped test specimen is to be as follows: an original gage length of 50 mm, a parallel portion length of 60 mm, and a parallel portion width of 25 mm. The thickness of the sheet-shaped test specimen is made the same as the thickness of the surface-treated steel sheet 1. The tensile test is performed at a test temperature of normal temperature (25°C) to determine the tensile strength TS (MPa), which is defined as the strength.

### [Preferable elongation of surface-treated steel sheet]

The elongation of the surface-treated steel sheet 1 of the present embodiment is not particularly limited. However, preferably the elongation of the surface-treated steel sheet 1 is a uniform elongation EL of 20% or more. A lower limit of the uniform elongation EL of the surface-treated steel sheet 1 is more preferably 23%, and further preferably is 25%. An upper limit of the uniform elongation EL of the surface-treated steel sheet 1 is preferably 35%. The uniform elongation EL is measured by performing the tensile test described above, and determining the uniform elongation EL (%).

### [Production method]

A method for producing the surface-treated steel sheet 1 of the present embodiment will now be described. The method for producing the surface-treated steel sheet 1 described hereunder is one example of a method for producing the surface-treated steel sheet 1 of the present embodiment. Accordingly, the surface-treated steel sheet 1 composed as described above may be produced by another production method that is different from the production method described hereunder. However, the production method described hereunder is a preferable example of a method for producing the surface-treated steel sheet 1 of the present embodiment.

The method for producing the surface-treated steel sheet 1 of the present embodiment includes a process of preparing the steel sheet 2 (steel sheet preparation process), a process of forming a Ni plating layer on a surface of the steel sheet 2 (Ni plating process), a process of forming a Co plating layer on the Ni plating layer (Co plating process), a process of subjecting the steel sheet having the Ni plating layer and the Co plating layer to an alloying heat treatment (alloying heat treatment process), and a process of subjecting the steel sheet that underwent the alloying heat treatment to temper rolling (temper rolling process). Each of these processes is described hereunder.

### [Steel sheet preparation process]

In the steel sheet preparation process, the aforementioned steel sheet 2 is prepared. The steel sheet 2 may be supplied by a third party or may be produced. In the case of producing the steel sheet 2, for example, the steel sheet 2 is produced by the following method. Molten steel having the aforementioned chemical composition is produced. The produced molten steel is used to produce a cast piece. The produced cast piece is subjected to hot rolling, pickling, and cold rolling. The temperature in the hot rolling is, for example, 800 to 900°C. The reduction of area in the cold rolling is, for example, 80 to 90%. Another process may be performed after the cold rolling. The other process is, for example, temper rolling. In the case of performing temper rolling, the rolling reduction in the temper rolling is for example, 0.2 to 2.0%. The steel sheet 2 can be produced by the above process.

### [Ni plating process]

In the Ni plating process, a Ni plating layer consisting of Ni and impurities is formed on the surface of the steel sheet 2. Specifically, the steel sheet 2 is brought into contact with a Ni plating bath, and electroplating or electroless plating is performed. The Ni plating process may be performed by immersing the steel sheet 2 in the Ni plating bath and performing electroplating. A well-known Ni plating bath can be used as the Ni plating bath. The Ni plating bath, for example, is selected from the group consisting of a Watts bath, a sulfate bath, a sulfamate bath, a Wood's bath, a borofluoride bath, a chloride bath and a citrate bath. The Ni plating bath contains Ni ions. The content of Ni ions is, for example, 0.5 to 2.0 mol/L. The Ni ions may be added to the Ni plating bath as one or more kinds selected from the group consisting of nickel sulfate, ammonium nickel sulfate, nickel chloride, and nickel sulfamate. The Ni plating bath may contain other components in addition to Ni ions. The other components are, for example, one or more kinds selected from the group consisting of boric acid, hydrochloric acid, sodium thiocyanate, citric acid, a brightener, a pH adjustor, and a surface active agent. The other components are set as appropriate according to the type of Ni plating bath.

The plating conditions such as the Ni plating bath temperature, the pH of the Ni plating bath, and the Ni plating treatment time can be set as appropriate. For example, plating may be performed under conditions of a Ni plating bath temperature of 25 to 70°C and a pH of the Ni plating bath of 1.0 to 5.0. In the case of electroplating, plating may be performed with a current density of 1 to 50 A/dm². The Ni plating treatment time is appropriately set according to the coating weight of the Ni plating (that is, the content of Ni in the Ni-Co-Fe alloy layer 3) (g/m²).

In the Ni plating layer formation process, for example, a Watts bath containing nickel (II) sulfate hexahydrate: 240 to 380 g/L, nickel (II) chloride hexahydrate: 0.40 to 80 g/L, and boric acid: 20 to 55 g/L may be used. Using this Watts bath, electroplating may be performed under conditions in which the pH of the Ni plating bath is 3.5 to 4.5, the Ni plating bath temperature is 45 to 55°C, and the current density is 1 to 40 A/dm². The Ni plating treatment time is appropriately set according to the coating weight of the Ni plating (that is, the content of Ni in the Ni-Co-Fe alloy layer 3) (g/m²). By this means, a Ni plating layer consisting of Ni and impurities can be formed on the surface of the steel sheet 2.

The Ni coating weight of the Ni plating layer is the same as the aforementioned content of Ni in the Ni-Co-Fe alloy layer 3. That is, preferably the plating conditions are adjusted so that the Ni coating weight per side of the steel sheet 2 falls within the range of 1.34 to 35.6 g/m². In a case where Fe is to be completely diffused in the Ni-Co-Fe alloy layer 3, preferably the Ni coating weight per side of the steel sheet 2 is 1.34 to 5.36 g/m². In a case where Fe is to be partially diffused in the Ni-Co-Fe alloy layer 3, preferably the Ni coating weight per side of the steel sheet 2 is 5.36 to 35.6 g/m².

### [Co plating process]

In the Co plating process, a Co plating layer consisting of Co and impurities is formed on the Ni plating layer. Specifically, the Ni plating layer on the surface of the steel sheet 2 is brought into contact with a Co plating bath, and electroplating is performed. The steel sheet 2 having the Ni plating layer may be immersed in the Co plating bath to perform electroplating. A commercially available Co plating bath can be used as the Co plating bath. The Co plating bath contains Co ions. The content of Co ions is, for example, 0.5 to 2.0 mol/L. The Co ions may be added to the Co plating bath as one or more kinds selected from the group consisting of cobalt sulfate and cobalt chloride. The Co plating bath may contain other components in addition to Co ions. The other components are, for example, one or more kinds selected from the group consisting of formic acid, boric acid, hydrochloric acid, sodium thiocyanate, citric acid, a brightener, a pH adjustor, and a surface active agent. The other components are set as appropriate according to the type of Co plating bath.

The plating conditions such as the Co plating bath temperature, the pH of the Co plating bath, and the Co plating treatment time can be set as appropriate. For example, plating may be performed under conditions of a Co plating bath temperature of 25 to 70°C and a pH of the Co plating bath of 1.0 to 5.0. In the case of electroplating, the electroplating may be performed with a current density of 1 to 50 A/dm². The Co plating treatment time is appropriately set according to the coating weight of the Co plating (that is, the content of Co in the Ni-Co-Fe alloy layer 3) (g/m²).

In the Co plating layer formation process, for example, a Co plating bath containing cobalt (II) sulfate heptahydrate: 240 to 330 g/L, boric acid: 20 to 55 g/L, formic acid: 15 to 30 g/L, and sulfuric acid: 0.5 to 3.0 g/L may be used. Using this Co plating bath, electroplating may be performed under conditions in which the pH of the Co plating bath is 1.0 to 3.0, the Co plating bath temperature is 40 to 60°C, and the current density is 1 to 40 A/dm². The Co plating treatment time is appropriately set according to the coating weight of the Co plating (that is, the content of Co in the Ni-Co-Fe alloy layer 3) (g/m²). By this means, a Co plating layer can be formed on the Ni plating layer.

The Co coating weight of the Co plating layer is the same as the aforementioned content of Co in the Ni-Co-Fe alloy layer 3. That is, preferably the plating conditions are adjusted so that the Co coating weight per side of the steel sheet 2 falls within the range of 0.45 to 1.34 g/m².

### [Alloying heat treatment process]

In the alloying heat treatment process, the steel sheet 2 having the Ni plating layer and the Co plating layer is subjected to an alloying heat treatment. By performing the alloying heat treatment, Ni in the Ni plating layer, Co in the Co plating layer, and Fe contained in the steel sheet 2 diffuse with each other, and the Ni-Co-Fe alloy layer 3 is formed. A well-known heating furnace can be used as the alloying heat treatment furnace. The alloying heat treatment is performed by continuously supplying the steel sheet 2 into the heating furnace.

In the present embodiment, the microstructure of the steel sheet 2 is controlled by adjusting the conditions of the alloying heat treatment which is performed after the Ni plating layer formation process and the Co plating layer formation process. If the alloying heat treatment is performed under the conditions described hereunder, the microstructure of the steel sheet 2 will be a microstructure containing ferrite and one or more kinds selected from the group consisting of cementite, pearlite, and bainite which have an area fraction of 1.2 to 5.0% in total.

### Highest temperature: more than 760°C to 860°C

In the present embodiment, by cooling from a two-phase region temperature under cooling conditions to be described later, a microstructure containing ferrite and one or more kinds selected from the group consisting of cementite, pearlite, and bainite which have an area fraction of 1.2 to 5.0% in total is obtained in the steel sheet 2. If the highest temperature during the alloying heat treatment is 760°C or less, the one or more kinds selected from the group consisting of cementite, pearlite, and bainite will not sufficiently precipitate. In such a case, the strength of the surface-treated steel sheet 1 will decrease. On the other hand, if the highest temperature during the alloying heat treatment is more than 860°C, the one or more kinds selected from the group consisting of cementite, pearlite, and bainite will not sufficiently precipitate. In such a case also, the strength of the surface-treated steel sheet 1 will decrease. Therefore, the treatment temperature during the alloying heat treatment is to be within the range of more than 760°C to 860°C. Here, the term "highest temperature during the alloying heat treatment" refers to the highest temperature that the steel sheet 2 reaches inside the heating furnace. The atmospheric gas during the alloying heat treatment is not particularly limited, and for example is N₂ + 2 to 25% H₂.

### Soaking time: 10 to less than 60 seconds

If the soaking time during the alloying treatment is less than 10 seconds, interdiffusion among Ni in the Ni plating layer, Co in the Co plating layer, and Fe contained in the steel sheet 2 will be insufficient. In this case, the adhesiveness of the Ni-Co-Fe alloy layer 3 will decrease. On the other hand, if the soaking time during the alloying treatment is 60 seconds or more, the hardness of the steel sheet 2 will decrease. Therefore, the soaking time is to be 10 to less than 60 seconds. A preferable lower limit of the soaking time is 15 seconds, and more preferably is 20 seconds. A preferable upper limit of the soaking time is 40 seconds. Here, the term "soaking time during the alloying treatment" refers to the holding time at the aforementioned highest temperature of the steel sheet 2.

### Cooling rate from when alloying heat treatment ends to 600°C: 13 to 25°C/s

The surface-treated steel sheet 1 on which the Ni-Co-Fe alloy layer 3 was formed by the alloying heat treatment is cooled. Here, if the cooling rate in the temperature range from the end of the alloying heat treatment to 600°C which is the formation temperature range of cementite, pearlite, and bainite is less than 13°C/s, the cooling rate will be too slow. In this case, the amount of cementite, pearlite, and bainite which is precipitated will be insufficient, and the strength of the surface-treated steel sheet 1 will decrease. On the other hand, if the cooling rate in the temperature range from the end of the alloying heat treatment to 600°C which is the formation temperature range of cementite, pearlite, and bainite is more than 25°C/s, the cooling rate will be too fast. In this case, cementite, pearlite, and bainite will excessively precipitate, and the ductility of the surface-treated steel sheet 1 will decrease. Therefore, the cooling rate from the end of the alloying heat treatment to 600°C is to be 13 to 25°C/s. By this means, a microstructure containing ferrite and one or more kinds selected from the group consisting of cementite, pearlite, and bainite which have an area fraction of 1.2 to 5.0% in total is obtained in the steel sheet 2. Cooling is performed by a well-known method. The cooling is, for example, gas cooling. By adjusting the gas flow rate during gas cooling, the cooling rate from the end of the alloying heat treatment to 600°C can be controlled. After cooling to 600°C, the surface-treated steel sheet 1 may be further cooled to about 300 to 100°C by gas cooling.

### Dew point: not particularly limited

In the method for producing the surface-treated steel sheet of the present embodiment, the dew point is not particularly limited. However, if the dew point during the alloying heat treatment is -25°C or more, in the thickness direction of the Ni-Co-Fe alloy layer 3, the Co concentration in the Ni-Co-Fe alloy layer 3 will be highest at a position which is on the outermost surface side of the Ni-Co-Fe alloy layer 3 relative to the position P_{HNi} and which is between the outermost surface of the Ni-Co-Fe alloy layer 3 and a depth 100 nm. In addition, if the dew point during the alloying heat treatment is -25°C or more, in the Ni-Co-Fe alloy layer 3, the Ni-concentrated region 4 can be formed between the outermost surface of the Ni-Co-Fe alloy layer 3 and the position P_{HCo}. In this case, discoloration of the surface of the surface-treated steel sheet can be suppressed. Therefore, preferably the dew point during the alloying heat treatment is -25°C or more. The upper limit of the dew point during the alloying heat treatment is not particularly limited, and taking into consideration industrial productivity, for example the upper limit is 5°C.

Furthermore, on the premise that the other conditions described above (highest temperature: more than 760°C to 860°C, soaking time: 10 to 180 seconds, cooling rate from end of alloying heat treatment to 600°C: 13 to 25°C/s, dew point: - 25°C or more) are satisfied, if the dew point is less than 0°C, the ratio of the Co concentration to the Ni concentration at the position P_{HCo} can be adjusted to 3.0 or more.

### [Temper rolling process]

In the temper rolling process, temper rolling is performed on the steel sheet subjected to the alloying heat treatment. By appropriately setting the temper rolling conditions, the thickness and press formability and the like of the surface-treated steel sheet 1 can be adjusted. The rolling reduction in the temper rolling is, for example, 0.5 to 3.0%.

The surface-treated steel sheet 1 of the present embodiment can be produced by the production processes described above. Note that, the method for producing the surface-treated steel sheet 1 of the present embodiment may include another process in addition to the processes described above.

### [Other process]

An example of another process is a preparation process. The preparation process may be performed before the Ni plating process.

### [Preparation process]

A preparation process may be performed before the Ni plating process. In the preparation process, the surface of the prepared steel sheet 2 is subjected to alkaline degreasing and/or pickling, to thereby remove an oxide film and impurities at the surface of the steel sheet 2. As a result, the adhesiveness of the Ni plating layer increases. Further, plating defects of the Ni plating layer can be reduced.

### EXAMPLES

Hereunder, advantageous effects of the surface-treated steel sheet of the present embodiment are described more specifically by way of Examples. The conditions adopted in the following Examples are one example of conditions which are employed for confirming the feasibility and advantageous effect of the surface-treated steel sheet of the present embodiment. Accordingly, the surface-treated steel sheet of the present embodiment is not limited to this one example of the conditions.

### [Steel sheet preparation process]

Molten steels having the chemical compositions shown in Table 1 were produced.

### [Table 1]

**TABLE 1**

| Test No. | Chemical Composition (mass%; balance is Fe and impurities) | | | | | | | | | |
|---|---|---|---|---|---|---|---|---|---|---|
| | C | Si | Mn | P | S | Sol.Al | N | B | Nb | Ti |
| 1 | 0.055 | 0.009 | 0.29 | 0.013 | 0.012 | 0.023 | 0.0005 | 0.0024 | 0.0006 | 0.004 |
| 2 | 0.057 | 0.012 | 0.34 | 0.017 | 0.021 | 0.021 | 0.0034 | 0.0018 | 0.0046 | 0.006 |
| 3 | 0.063 | 0.003 | 0.32 | 0.012 | 0.019 | 0.017 | 0.0021 | 0.0019 | 0.0028 | 0.007 |
| 4 | 0.045 | 0.018 | 0.27 | 0.008 | 0.013 | 0.013 | 0.0033 | 0.0022 | 0.0039 | 0.009 |
| 5 | 0.048 | 0.015 | 0.26 | 0.001 | 0.017 | 0.014 | 0.0032 | 0.0018 | 0.0004 | 0.001 |
| 6 | 0.063 | 0.007 | 0.34 | 0.008 | 0.012 | 0.019 | 0.0021 | 0.0021 | 0.0021 | 0.009 |
| 7 | 0.052 | 0.003 | 0.31 | 0.012 | 0.021 | 0.007 | 0.0009 | 0.0023 | 0.0040 | 0.007 |
| 8 | 0.058 | 0.011 | 0.29 | 0.018 | 0.008 | 0.024 | 0.0014 | 0.0016 | 0.0042 | 0.003 |
| 9 | 0.056 | 0.016 | 0.31 | 0.014 | 0.005 | 0.008 | 0.0029 | 0.0015 | 0.0032 | 0.008 |
| 10 | 0.048 | 0.013 | 0.33 | 0.003 | 0.017 | 0.024 | 0.0004 | 0.0024 | 0.0011 | 0.002 |
| 11 | 0.049 | 0.014 | 0.27 | 0.002 | 0.015 | 0.015 | 0.0029 | 0.0017 | 0.0005 | 0.002 |
| 12 | 0.050 | 0.015 | 0.27 | 0.003 | 0.014 | 0.014 | 0.0031 | 0.0019 | 0.0006 | 0.003 |
| 13 | 0.053 | 0.013 | 0.28 | 0.002 | 0.016 | 0.015 | 0.0029 | 0.0018 | 0.0000 | 0.000 |

The produced molten steels were used to produce cast pieces. The produced cast pieces were subjected to hot rolling at 800 to 900°C. After hot rolling, each of the hot-rolled steel sheets was subjected to pickling, and in addition, cold rolling with a reduction of area of 80 to 90% was performed on each steel sheet. Each of the obtained cold-rolled steel sheets was subjected to temper rolling with a rolling reduction of 0.2 to 2.0%. The steel sheets were subjected to preparations including alkaline degreasing and pickling.

### [Ni plating process]

A Ni plating layer was formed on the surface of the steel sheet of each test number that had been subjected to the preparations. The Ni plating layer was formed on both sides of each steel sheet. The obtained Ni plating layer was a plating layer consisting of Ni and impurities. The Ni plating conditions for each test number are shown in Table 2.

### [Table 2]

**TABLE2**

| Test No. | Ni Plating Bath Composition | | | | | Ni Plating Conditions | | |
|---|---|---|---|---|---|---|---|---|
| | Nickel (II) Sulfate Hexahydrate (g/L) | Nickel (II) Chloride Hexahydrate (g/L) | Boric Acid (g/L) | Ni Ions Concentration (g/L) | pH | Ni Plating Bath Temperature (°C) | Current Density (A/dm²) | Ni Plating Treatment Time (s) |
| 1 | 330 | 70 | 45 | 73 | 4.0 | 55 | 20 | 37.0 |
| 2 | 330 | 70 | 45 | 73 | 4.0 | 55 | 10 | 42.9 |
| 3 | 330 | 70 | 45 | 73 | 4.0 | 55 | 25 | 8.4 |
| 4 | 330 | 70 | 45 | 73 | 4.0 | 55 | 12 | 45.6 |
| 5 | 330 | 70 | 45 | 73 | 4.0 | 55 | 30 | 24.9 |
| 6 | 330 | 70 | 45 | 73 | 4.0 | 55 | 10 | 108.0 |
| 7 | 330 | 70 | 45 | 73 | 4.0 | 55 | 20 | 29.8 |
| 8 | 330 | 70 | 45 | 73 | 4.0 | 55 | 25 | 9.4 |
| 9 | 330 | 70 | 45 | 73 | 4.0 | 55 | 40 | 10.5 |
| 10 | 330 | 70 | 45 | 73 | 4.0 | 55 | 20 | 31.7 |
| 11 | 330 | 70 | 45 | 73 | 4.0 | 55 | 30 | 24.0 |
| 12 | 330 | 70 | 45 | 73 | 4.0 | 55 | 30 | 24.1 |
| 13 | 330 | 70 | 45 | 73 | 4.0 | 55 | 30 | 24.6 |

### [Co plating process]

A Co plating layer was formed on the Ni plating layer of the steel sheet of each test number. The Co plating layer was formed on both sides of the steel sheet. The obtained Co plating layer was a plating layer consisting of Co and impurities. The Co plating conditions for each test number are shown in Table 3.

### [Table 3]

**TABLE3**

| Test No. | Co Plating Bath Composition | | | | | | Co Plating Conditions | | |
|---|---|---|---|---|---|---|---|---|---|
| | Cobalt (II) Sulfate Heptahydrat e (g/L) | Bori c Acid (g/L) | Formi c Acid (g/L) | Sulfuri c Acid (g/L) | Co Ions Concentratio n (g/L) | P H | Co Plating Bath Temperatur e (°C) | Current Density (A/dm² ) | Co Plating Treatmen t Time (s) |
| 1 | 250 | 45 | 25 | 1.5 | 52 | 1.5 | 55 | 20 | 3.0 |
| 2 | 250 | 45 | 25 | 1.5 | 52 | 1.5 | 55 | 15 | 7.7 |
| 3 | 250 | 45 | 25 | 1.5 | 52 | 1.5 | 55 | 26 | 4.4 |
| 4 | 250 | 45 | 25 | 1.5 | 52 | 1.5 | 55 | 14 | 8.0 |
| 5 | 250 | 45 | 25 | 1.5 | 52 | 1.5 | 55 | 20 | 5.8 |
| 6 | 250 | 45 | 25 | 1.5 | 52 | 1.5 | 55 | 15 | 9.8 |
| 7 | 250 | 45 | 25 | 1.5 | 52 | 1.5 | 55 | 25 | 2.4 |
| 8 | 250 | 45 | 25 | 1.5 | 52 | 1.5 | 55 | 30 | 3.4 |
| 9 | 250 | 45 | 25 | 1.5 | 52 | 1.5 | 55 | 40 | 2.9 |
| 10 | 250 | 45 | 25 | 1.5 | 52 | 1.5 | 55 | 10 | 10.9 |
| 11 | 250 | 45 | 25 | 1.5 | 52 | 1.5 | 55 | 20 | 5.7 |
| 12 | 250 | 45 | 25 | 1.5 | 52 | 1.5 | 55 | 20 | 5.9 |
| 13 | 250 | 45 | 25 | 1.5 | 52 | 1.5 | 55 | 20 | 5.8 |

### [Alloying heat treatment process]

The steel sheets having a Ni plating layer and a Co plating layer were subjected to a continuous alloying heat treatment. The alloying heat treatment was performed under the conditions shown hereunder. The alloying heat treatment conditions for each test number are shown in Table 4.

### [Table 4]

**TABLE4**

| Test No. | Alloying Heat Treatment Conditions | | | |
|---|---|---|---|---|
| | Highest Temperature (°C) | Soaking Time (s) | Dew Point (°C) | Cooling Rate to 600°C (°C/s) |
| 1 | 865 | 30 | -25 | 25 |
| 2 | 755 | 30 | -20 | 15 |
| 3 | 810 | 25 | -10 | 10 |
| 4 | 810 | 20 | -15 | 27 |
| 5 | 810 | 30 | -10 | 15 |
| 6 | 810 | 30 | -10 | 14 |
| 7 | 810 | 30 | -15 | 16 |
| 8 | 810 | 30 | -10 | 14 |
| 9 | 810 | 25 | -30 | 18 |
| 10 | 810 | 30 | 0 | 21 |
| 11 | 810 | 30 | -10 | 25 |
| 12 | 810 | 30 | -10 | 13 |
| 13 | 810 | 30 | -10 | 15 |

### [Temper rolling process]

Each steel sheet after the alloying heat treatment was subjected to temper rolling. The rolling reduction in the temper rolling was 1.5%. The surface-treated steel sheet of each test number was produced by the above processes.

### [Test to measure content of Ni and content of Co in Ni-Co-Fe alloy layer]

The content of Ni and content of Co in the Ni-Co-Fe alloy layer of the surface-treated steel sheet of each test number were measured by the following method. The Ni-Co-Fe alloy layer of the surface-treated steel sheet of each test number was subjected to elemental analysis using a fluorescent X-ray analyzer. As the fluorescent X-ray analyzer, ZSX Primus II manufactured by Rigaku Corporation was used. The fluorescent X-ray analyzer prepared a calibration curve in advance using a standard sample having a known content of Ni and a standard sample having a known content of Co. The content of Ni (g/m²) and the content of Co (g/m²) in the Ni-Co-Fe alloy layer were determined based on the calibration curve. The results are shown in the column "Ni Content (g/m²)" and the column "Co Content (g/m²)" in Table 5.

### [Table 5]

**TABLE5**

| Test No. | Ni-Co-Fe Alloy layer | | | | | | | | | Steel Sheet | Evaluation Results | | | |
|---|---|---|---|---|---|---|---|---|---|---|---|---|---|---|
| | Ni Content (g/m²) | Co Content (g/m²) | Thickness of Ni-Co-Fe Alloy Layer (µm) | Outermost Surface Ni Concentration (%) | Ni Peak Depth (µm)) | Co Peak Depth (nm) | Co/Ni Ratio | Ni-Concentrated Region | Thickness of Ni-Concentrated Region (µm) | Total Area Fraction of Cementite + Pearlite + Bainite (%) | TS (MPa) | EL (%) | Impedance (Ω) | Color Difference (ΔE*) |
| 1 | 21.4 | 0.52 | 2.2 | 32 | 0.6 | 50 | 6.1 | F | 0.05 | 0.9 | 352 | 26 | 5 | 2.6 |
| 2 | 12.4 | 1.02 | 1.4 | 45 | 0.4 | 90 | 5.2 | F | 0.09 | 0.8 | 329 | 21 | 8 | 2.3 |
| 3 | 6.1 | 1.00 | 0.8 | 37 | 0.3 | 80 | 5.5 | F | 0.08 | 1.1 | 341 | 23 | 9 | 1.9 |
| 4 | 15.8 | 0.99 | 1.7 | 36 | 0.5 | 80 | 4.7 | F | 0.08 | 5.3 | 431 | 18 | 11 | 2.3 |
| 5 | 21.6 | 1.02 | 2.1 | 31 | 0.6 | 80 | 6.1 | F | 0.08 | 2.7 | 412 | 28 | 6 | 0.9 |
| 6 | 31.2 | 1.29 | 3.4 | 41 | 0.8 | 90 | 5.2 | F | 0.09 | 2.9 | 398 | 29 | 7 | 2.1 |
| 7 | 17.2 | 0.52 | 1.8 | 38 | 0.5 | 50 | 4.5 | F | 0.05 | 3.1 | 420 | 27 | 9 | 1.7 |
| 8 | 6.8 | 0.89 | 0.9 | 41 | 0.3 | 70 | 4.3 | F | 0.07 | 2.5 | 410 | 26 | 12 | 2.2 |
| 9 | 12.1 | 1.01 | 1.3 | 31 | 0.4 | 190 | 0.3 | N | - | 2.6 | 398 | 28 | 121 | 4.1 |
| 10 | 18.3 | 0.96 | 1.7 | 43 | 0.5 | 50 | 2.8 | F | 0.05 | 2.7 | 401 | 26 | 52 | 2.8 |
| 11 | 20.8 | 1.01 | 2.1 | 30 | 0.6 | 80 | 5.9 | F | 0.08 | 5.0 | 439 | 20 | 7 | 1.1 |
| 12 | 20.9 | 1.03 | 2.2 | 33 | 0.6 | 80 | 6.3 | F | 0.08 | 1.2 | 385 | 33 | 8 | 1.0 |
| 13 | 21.3 | 1.02 | 2.1 | 30 | 0.6 | 80 | 6.0 | F | 0.08 | 2.8 | 415 | 27 | 7 | 1.0 |

### [Test to measure Ni concentration, Co concentration, and Fe concentration by GDS]

The Ni concentration, the Co concentration, and the Fe concentration in the Ni-Co-Fe alloy layer of the surface-treated steel sheet of each test number were measured by glow discharge spectrometry (GDS). A radio frequency glow discharge optical emission spectrometer (manufactured by Horiba Ltd., model: GD-Profiler 2) was used for the measurement. The emission intensity of Ni, the emission intensity of Co, and the emission intensity of Fe were converted to the content of Ni (mass%), the content of Co (mass%), and the content of Fe (mass%), respectively. The sum of the obtained content of Ni (mass%), content of Co (mass%), and content of Fe (mass%) was taken as 100%, and the proportion (%) of Ni, the proportion (%) of Co, and the proportion (%) of Fe were determined. The obtained proportion (%) of Ni, proportion (%) of Co, and proportion (%) of Fe were adopted as the Ni concentration (%), the Co concentration (%), and the Fe concentration (%), respectively. Here, because the Ni-Co-Fe alloy layer may not necessarily be accurately measured in measurement data for which the depth obtained by conversion from the Ar sputtering time is less than 0.006 µm (6 nm), such measurement data was removed from the object of analysis, and only data for which the depth obtained by conversion from the Ar sputtering time was 0.006 µm or more was used. A point at which the depth obtained by conversion from the Ar sputtering time was 0.006 µm was taken as the depth of 0 µm. The GDS measurement conditions were as follows.
H.V.: 785 V for Fe, 630 V for Ni, 720 V for Co
Anode diameter: ϕ 4 mm
Gas: Ar
Gas pressure: 600 Pa
Output: 35 W

The following items were determined from the results of the GDS analysis. The distance in the thickness direction of the Ni-Co-Fe alloy layer from the surface of the surface-treated steel sheet to a position at which the Ni concentration became 1% was determined, and the determined value was adopted as the thickness (µm) of the Ni-Co-Fe alloy layer. The results are shown in the column "Thickness of Ni-Co-Fe Alloy Layer (µm)" in Table 5. The Ni concentration in the outermost surface of the Ni-Co-Fe alloy layer was determined. The results are shown in the column "Outermost Surface Ni Concentration (%)" in Table 5. Here, the term "Ni concentration in the outermost surface of the Ni-Co-Fe alloy layer" refers to the Ni concentration at the initial depth at which the depth obtained by conversion from the Ar sputtering time was 0.006 µm or more. In the thickness direction of the Ni-Co-Fe alloy layer, a distance (Ni peak depth) from the outermost surface of the Ni-Co-Fe alloy layer to the position (P_{HNi}) where the Ni concentration was highest was determined. The results are shown in the column "Ni Peak Depth (µm)" in Table 5. Further, in the thickness direction of the Ni-Co-Fe alloy layer, a distance (Co peak depth) from the outermost surface of the Ni-Co-Fe alloy layer to the position (P_{HCo}) where the Co concentration was highest was determined. The results are shown in the column "Co Peak Depth (nm)" in Table 5. The ratio of the Co concentration to the Ni concentration at the position (P_{HCo}) where the Co concentration was highest was determined. The results are shown in the column "Co/Ni Ratio" in Table 5. Further, in the thickness direction of the Ni-Co-Fe alloy layer, whether or not a region in which the Ni concentration increased in the direction toward the outermost surface of the Ni-Co-Fe alloy layer was present between the outermost surface of the Ni-Co-Fe alloy layer and the position (P_{HCo}) where the Co concentration was highest was investigated. The results are shown in the column "Ni-Concentrated Region" in Table 5. In the thickness direction of the Ni-Co-Fe alloy layer, if a Ni-concentrated region was present between the outermost surface of the Ni-Co-Fe alloy layer and the position (P_{HCo}) where the Co concentration was highest, it was determined that a Ni-concentrated region was formed. If the letter "F" (Formed) is described in the column "Ni-Concentrated Region" in Table 5, it indicates that a Ni-concentrated region was formed. On the other hand, in the thickness direction of the Ni-Co-Fe alloy layer, if a Ni-concentrated region was not present between the outermost surface of the Ni-Co-Fe alloy layer and the position (P_{HCo}) where the Co concentration was highest, it was determined that a Ni-concentrated region was not formed. If the letter "N" (Not Formed) is described in the column "Ni-Concentrated Region" in Table 5, it indicates that a Ni-concentrated region was not formed. Further, the distance in the thickness direction of the Ni-Co-Fe alloy layer of a region in which the Ni concentration increased in the thickness direction of the Ni-Co-Fe alloy layer towards the outermost surface of the Ni-Co-Fe alloy layer and which was a region that, in the thickness direction of the Ni-Co-Fe alloy layer 3, was between the outermost surface of the Ni-Co-Fe alloy layer 3 and a position where the Ni concentration was lowest within a range from a position where the Ni concentration was highest to the outermost surface of the Ni-Co-Fe alloy layer 3 was adopted as the thickness (µm) of the Ni-concentrated region. The results are shown in the column "Thickness of Ni-Concentrated Region (µm)" in Table 5.

### [Test to measure total area fraction of cementite, pearlite, and bainite in steel sheet]

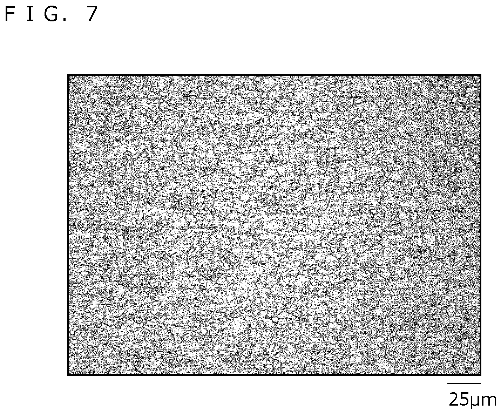

For the surface-treated steel sheet of each test number, the total area fraction of cementite, pearlite, and bainite in the steel sheet was measured by the following method. Each surface-treated steel sheet was cut parallel to the rolling direction of the surface-treated steel sheet and in the thickness direction of the surface-treated steel sheet to thereby obtain an observation surface. The observation surface was mirror-polished with an abrasive cloth sheet. The mirror-polished observation surface was subjected to etching using a nital solution (3% nitric acid-ethanol solution). The observation surface after etching was observed with an optical microscope at a magnification of × 100. The center of the observation visual field and a position (1/2T) at one half of a thickness T of the surface-treated steel sheet were caused to coincide. An optical micrograph was created from the observation of the optical microscope. The obtained optical micrograph was subjected to black-and-white binarization by setting a threshold value so that all of the black microstructure was detected. The areas of the black regions were added together to obtain the total area fraction (%) of cementite, pearlite, and bainite. The measurement was performed at five arbitrary locations on the surface-treated steel sheet. The arithmetic average of the values obtained at the five locations was adopted as the total area fraction (%) of cementite, pearlite, and bainite. The results are shown in the column "Total Area Fraction of Cementite + Pearlite + Bainite (%)" in Table 5. Note that, the microstructure other than cementite, pearlite, and bainite of each test number was ferrite. The micrograph of Test No. 5 is shown in FIG. 4. The micrograph of Test No. 2 is shown in FIG. 7.

### [Tensile test]

The surface-treated steel sheet of each test number was subjected to a tensile test by a method in accordance with JIS Z2241 (2011). Specifically, from the surface-treated steel sheet of each test number, a sheet-shaped test specimen was taken from the center of the sheet width in a direction parallel to the rolling direction of the surface-treated steel sheet. The sheet-shaped test specimen had a size in which the original gage length was 50 mm, the parallel portion length was 60 mm, and the parallel portion width was 25 mm. The thickness of the sheet-shaped test specimen was the same as the thickness of the surface-treated steel sheet of the respective test numbers. The tensile test was performed at a test temperature of normal temperature (25°C), and the tensile strength TS (MPa) and the uniform elongation EL (%) were determined. The results are shown in Table 5.

### [Impedance measurement test]

The charge transfer resistance on the surface of the surface-treated steel sheet of each test number was measured. Specifically, the surface-treated steel sheet of each test number was held at a constant potential for 10 days at 0.3 V vs. Hg/HgO in a 35% KOH aqueous solution at 60°C. The impedance value at a frequency of 0.1 Hz of the surface-treated steel sheet after being held at the constant potential was measured. The measurement was performed using HZ-7000 manufactured by Hokuto Denko Co., Ltd. The results are shown in Table 5.

### [Color difference measurement test]

The surface-treated steel sheet of each test number was placed in a constant temperature and humidity testing machine (manufactured by ESPEC. CORP.; model name: LH), and held at a temperature of 60°C and a humidity of 90% RH for 240 hours. The L*a*b* values of the surface-treated steel sheet were measured before and after being held at the constant temperature and constant humidity. A spectrophotometer (manufactured by KONICA MINOLTA, INC., model number CM-700d) was used for the measurement. The measurement conditions were as follows: measurement diameter: ϕ 8 mm, SCE, D65 light, and 2° visual field. A color difference (ΔE*) was determined based on the L*a*b* values before and after being held at the constant temperature and constant humidity. The results are shown in Table 5.

### [Evaluation results]

Referring to Table 4 and Table 5, the surface-treated steel sheet of each of Test Nos. 5 to 13 included: a steel sheet having a microstructure containing ferrite and one or more kinds selected from the group consisting of cementite, pearlite, and bainite which had an area fraction of 1.2 to 5.0% in total; and, on the steel sheet surface, a Ni-Co-Fe alloy layer containing Ni, Co and Fe. As a result, the tensile strength TS was 380 MPa or more. That is, the surface-treated steel sheet of each of Test Nos. 5 to 13 had excellent strength even when provided with a Ni-Co-Fe alloy layer. Further, in the surface-treated steel sheet of each of Test Nos. 5 to 13, the uniform elongation EL was 20% or more.

In addition, in the surface-treated steel sheet of each of Test Nos. 5 to 8 and 10 to 13, in the thickness direction of the Ni-Co-Fe alloy layer, the Co concentration in the Ni-Co-Fe alloy layer was highest at a position which was on the outermost surface side of the Ni-Co-Fe alloy layer relative to a position where the Ni concentration in the Ni-Co-Fe alloy layer was highest, and which was between the outermost surface of the Ni-Co-Fe alloy layer and a depth of 100 nm from the outermost surface, and the Ni-Co-Fe alloy layer included, between the outermost surface of the Ni-Co-Fe alloy layer and a position where the Co concentration was highest, a Ni-concentrated region in which the Ni concentration increased toward the outermost surface of the Ni-Co-Fe alloy layer. Therefore, the impedance of the surface-treated steel sheets of Test Nos. 5 to 8 and 10 to 13 was low compared to Test No. 9. Further, the color difference ΔE* of the surface-treated steel sheets of Test Nos. 5 to 8 and 10 to 13 was low compared to the color difference ΔE* of Test No. 9.

In the surface-treated steel sheets of Test Nos. 5 to 8 and 11 to 13, in addition, in the thickness direction of the Ni-Co-Fe alloy layer, at the position where the Co concentration was highest, the ratio of the Co concentration to the Ni concentration was 3.0 or more. Therefore, the impedance of the surface-treated steel sheets of Test Nos. 5 to 8 and 11 to 13 was low compared to Test No. 9 and Test No. 10.

On the other hand, in the surface-treated steel sheet of Test No. 1, the total of the area fractions of one or more kinds selected from the group consisting of cementite, pearlite, and bainite was less than 1.2%. As a result, the tensile strength TS was less than 380 MPa. That is, the surface-treated steel sheet of Test No. 1 did not have high strength.

In the surface-treated steel sheet of Test No. 2, the total of the area fractions of one or more kinds selected from the group consisting of cementite, pearlite, and bainite was less than 1.2%. As a result, the tensile strength TS was less than 380 MPa. That is, the surface-treated steel sheet of Test No. 2 did not have high strength.

In the surface-treated steel sheet of Test No. 3, the total of the area fractions of one or more kinds selected from the group consisting of cementite, pearlite, and bainite was less than 1.2%. As a result, the tensile strength TS was less than 380 MPa. That is, the surface-treated steel sheet of Test No. 3 did not have high strength.

In the surface-treated steel sheet of Test No. 4, the total of the area fractions of one or more kinds selected from the group consisting of cementite, pearlite, and bainite was more than 5.0%. As a result, the uniform elongation EL was less than 20%.

An embodiment of the present disclosure has been described above. However, the foregoing embodiment is merely an example for implementing the present disclosure. Accordingly, the present disclosure is not limited to the above embodiment, and the above embodiment can be appropriately modified and implemented within a range that does not deviate from the gist of the present invention.

### REFERENCE SIGNS LIST

- 1: Surface-treated Steel Sheet
- 2: Steel Sheet
- 3: Ni-Co-Fe Alloy Layer
- 4: Ni-concentrated Region
- 100: Ferrite
- 200: Cementite, Pearlite, or Bainite

## Claims

1. A surface-treated steel sheet, comprising:
a steel sheet having a microstructure containing: ferrite, and one or more kinds selected from a group consisting of cementite, pearlite, and bainite having an area fraction of 1.2 to 5.0% in total; and
on a steel sheet surface,
a Ni-Co-Fe alloy layer containing Ni, Co and Fe.

2. The surface-treated steel sheet according to claim 1, wherein:
in a thickness direction of the Ni-Co-Fe alloy layer, a Co concentration in the Ni-Co-Fe alloy layer is highest at a position which is on an outermost surface side of the Ni-Co-Fe alloy layer relative to a position where a Ni concentration in the Ni-Co-Fe alloy layer is highest, and which is between the outermost surface of the Ni-Co-Fe alloy layer and a depth of 100 nm from the outermost surface; and
in the Ni-Co-Fe alloy layer, a Ni-concentrated region in which the Ni concentration increases toward the outermost surface of the Ni-Co-Fe alloy layer is formed between the outermost surface of the Ni-Co-Fe alloy layer and a position where the Co concentration is highest.

3. The surface-treated steel sheet according to claim 1 or claim 2, wherein:
in the thickness direction of the Ni-Co-Fe alloy layer, at a position where the Co concentration is highest, a ratio of the Co concentration to the Ni concentration is 3.0 or more.

4. The surface-treated steel sheet according to any one of claims 1 to 3, wherein:
per side of the steel sheet, a content of Ni in the Ni-Co-Fe alloy layer is 1.34 to 5.36 g/m², and a content of Co in the Ni-Co-Fe alloy layer is 0.45 to 1.34 g/m².

5. The surface-treated steel sheet according to any one of claims 1 to 3, wherein:
per side of the steel sheet, a content of Ni in the Ni-Co-Fe alloy layer is 5.36 to 35.6 g/m², and a content of Co in the Ni-Co-Fe alloy layer is 0.45 to 1.34 g/m².

6. The surface-treated steel sheet according to any one of claims 1 to 5, wherein a chemical composition of the steel sheet consists of, in mass%:
C: 0.045 to 0.065%,
Si: 0.020% or less,
Mn: 0.25 to 0.35%,
P: 0.020% or less,
S: 0.004 to 0.022%,
sol. Al: 0.005 to 0.025%,
N: 0.0040% or less,
B: 0.0015 to 0.0025%,
Nb: 0 to 0.0050%,
Ti: 0 to 0.010%, and
with the balance being Fe and impurities.
